**Europäisches Patentamt**

**European Patent Office**

**Office européen des brevets**

(11) Veröffentlichungsnummer: **0 161 644**
**B1**

(12) **EUROPÄISCHE PATENTSCHRIFT**

(45) Veröffentlichungstag der Patentschrift: **12.09.90**

(21) Anmeldenummer: **85105754.7**

(22) Anmeldetag: **10.05.85**

(51) Int. Cl.⁵: **F 16 C 17/24**

(54) **Gleitlager mit Einrichtungen zur Örtlichen Bestimmung der in der Gleitschicht herrschenden Temperatur.**

(30) Priorität: **18.05.84 DE 3418448**

(43) Veröffentlichungstag der Anmeldung:
**21.11.85 Patentblatt 85/47**

(45) Bekanntmachung des Hinweises auf die
Patenterteilung:
**12.09.90 Patentblatt 90/37**

(84) Benannte Vertragsstaaten:
**AT CH DE LI**

(56) Entgegenhaltungen:
**DE-C- 968 084**
**DE-U-7 313 958**
**DE-U-8 231 290**
**FR-A-1 437 205**
**US-A-2 961 875**
**US-A-3 052 123**

(73) Patentinhaber: **Braunschweiger Hüttenwerk GmbH**
**Alte Leipziger Strasse 117-118**
**D-3300 Braunschweig (DE)**

(72) Erfinder: **Grosskurth, Hans**
**Tulpenweg 19**
**D-6229 Walluf 1 (DE)**
Erfinder: **Schwarz, Fritz**
**Im Ellenbügel 38**
**D-6456 Langenselbold (DE)**

Courier Press, Leamington Spa, England.

## Beschreibung

Die Erfindung bezieht sich auf eine Einrichtung zur Bestimmung der in der Gleitschicht eines Gleitlagers an einer bestimmten Stelle herrschenden Temperatur, die durch eine Bohrung im Lagergehäuse und im Lagerkörper des Gleitlagers hindurch bis in den Bereich der die Lagergleitfläche bildenden Gleitschicht greift.

Da sich bei Gleitlagern der Verschleiß der Gleitschicht durch Abrieb und sich damit anbahnende Schäden am Lager und dem sich darin bewegenden Körpern durch merkliche Temperaturerhöhung im Bereich der Lagerlauffläche gegenüber der normalen Betriebstemperatur äußern, ist man bestrebt, zur Vermeidung erheblicher Lagerschäden und damit erheblicher Reparturkosten solche Temperaturerhöhung frühzeitig zu erkennen.

Hierzu ist aus US—B—2,961,875 und DE—U—73 13 958 bekannt, im Lagerstützkörper von außen Bohrungen anzubringen, die sich bis zur Gleitschicht erstrecken, und in diese Bohrungen Temperaturfühler einzusetzen. Hierzu kann man entweder herkömmliche Thermoelemente mittels in die jeweilige Bohrung einzusetzenden Stopfen anbringen, oder man stellt diese Thermoelemente selbst massiv aus einem Werkstoff her, der möglichst die gleiche Temperatur- und Wärmeleitzahl wie der Lagerwerkstoff aufweist und füllt damit die Bohrung vollständig aus (messen+prüfen/Automatik, Juli/August 1979, Seiten 567 bis 573). Beide Möglichkeiten sind aber mit dem Nachteil behaftet, daß bei einem notwendigen Austausch der Gleitlager die in dieses Gleitlager eingebauten Temperaturfühler, d.h. die teuren Thermoelemente im allgemeinen verlorengehen. Falls solche, in einem ausgetauschten Gleitlager direkt eingebaute Temperaturfühler noch verwendbar sind, ist die Rückgewinnung solcher Temperaturfühler aus ausgetauschten Gleitlagern in hohem Maße aufwendig.

Gemäß DE—U—73 13 958 wird daher vorgeschlagen, die Bohrungen im Gleitlagerstützkörper und in der Lageraufnahme bzw. im Lagergehäuse derart auszubilden, daß die Temperaturfühler jederzeit eingesetzt und entfernt werden können. Da Schwingungen und sonstige Relativbewegungen zwischen dem Gleitlager und der Lageraufnahme unvermeidlich sind, müssen die in dem Gleitlagerstützkörper angebrachten Aufnahmebohrungen für Temperaturfühler ausreichend weit sein, um ein ausreichendes Spiel des Temperaturfühlers innerhalb der Bohrung zu ermöglichen. Die für zuverlässige Temperaturmessung erforderliche feste, stabile Anbringung des Temperaturfühlers in dem Gleitlagerstützkörper ist bei dieser Anbringungsweise nicht möglich. Außerdem ist die Temperaturmessung an der Lagerlauffläche gerade mit fortschreitendem Verschleiß an der Gleitschicht des Lagers wichtig. Die gemäß DE—U—73 13 958 eingeführten Temperaturfühler würden dann in direkte Berührung mit der Oberfläche des im Gleitlager geführten Maschinenteiles kommen und nicht allein die Lagerfunktion stören, sondern selbst beschädigt werden.

Zur Vermeidung dieser bei in Bohrungen des Gleitlagerstützkörpers eingebauten oder eingeführten Temperaturfühlern auftretenden Mängel ist aus DD—C—139 299 bekannt, die Gleitschicht und den Gleitlagerstützkörper als Teile eines Thermoelementes zu benutzen, da diese beiden Teile des Gleitlagers aus verschiedenen Metallen bestehen und daher eine definierte Thermokraft gegeneinander aufweisen. Abgesehen davon, daß die Herstellung elektrischer Kontakte zur Gleitschicht des Lagers schwierig und aufwendig ist und mit zunehmendem Verschleiß der Gleitschicht auch solche elektrischen Kontakte zerstört werden, läßt sich aufgrund der elektrischen Leitfähigkeit der Gleitschicht und des Gleitlagerstützkörpers nur ein Temperaturmittel über die gesamte Lagerlauffläche feststellen. Der aus DD—C—139 299 bekannte Vorschlag geht im übrigen von direkter Bindung der Gleitschicht an den Gleitlagerstützkörper aus und dürfte dann kaum noch durchführbar sein, wenn mehr oder weniger dünne Schichten für die eine oder andere Funktion zwischen dem Gleitlagerstützkörper und der Gleitschicht vorgesehen sind.

Weiterhin ist aus der FR—C—1 437 205 eine Einrichtung bekannt, bei welcher zur Arretierung bzw. Entfernung des eigentlichen Wärmeleiterelementes Gewindeeinsätze vorgesehen sind. Bei dieser bekannten Temperatur-Meßeinrichtung ist somit immer ein erheblicher Montageaufwand notwendig, wobei ein weiterer Nachteil darin zu sehen ist, daß der Lagerstützkörper eine bestimmte Wanddicke aufweisen muß, um die notwendigen Gewindegänge einschneiden zu können.

Demgegenüber ist es Aufgabe der Erfindung, Gleitlager insbesondere Gleitlagerschalen mit Gleitlagerstützkörper und Gleitschicht derart mit Teilen von Einrichtungen zur örtlichen Bestimmung der in der Gleitschicht herrschenden Temperatur auszustatten, daß einerseits Temperaturerhöhungen in der Gleitschicht schnell und zuverlässig ekannt werden können, und zwar insbesondere auch dann, wenn erheblicher Verschleiß an der Gleitschicht eingetreten ist, und daß andererseits bei einem notwendigen Austausch des Gleitlagers umfangreiche Installationsarbeiten für den Ausbau eines Temperaturfühler oder der Verlust eines eingebauten Temperaturfühlers vermieden werden.

Diese Aufgabe wird erfindungsgemäß dadurch gelöst, daß die Einrichtung in ein stiftförmiges, den Stützkörper durchsetzendes Wärmeleiterelement und ein auf das Wärmeleiterelement greifendes, im Lagergehäuse befindliches Temperaturfühler- und Temperaturmeßelement unterteilt ist; und daß das Wärmeleiterelement an seinem der Gleitschicht benachbarten Ende in wärmeleitender Verbindung mit dem Stützkörper bzw. einer im Stützkörper angebrachten Zwischenschicht gehalten und an seinem übrigen Teil wärmeisolierend gegenüber dem Stützkörper abgeschirmt ist.

Das in den Stützkörper des Gleitlagers eingesetzte Wärmeleiterelement kann so billig gehalten sein, daß sein Verbleib in einem ausgetauschten Gleitlager keinen nennenswerten Verlust darstellt. Da sich as Wärmeleiterelement von einer definierten Stelle der Lagerlauffläche aus nach der Außenfläche des Gleitlagers erstreckt, ermöglicht es die Temperaturbestimmung zu einem definierten örtlichen Bereich der Lagerlauffläche, so daß als für Lagerverschleiß kritisch erkannte Bereiche der Lagerlauffläche einer ebenso sicheren Temperaturüberwachung unterzogen werden können wie bei direktem Einbau eines Temperaturfühlers bzw. eines Temperatur-Meßelements in den Gleitlagerstützkörper. Da das Wärmeleiterelement fest in den Gleitlagerstützkörper eingebaut werden kann, tritt keine merkliche Verminderung der Stabilität des Gleitlagerstützkörpers ein, und zwar auch nicht, wenn eine Mehrzahl von Wärmeleiterelementen in den Gleitlagerstützkörper eingebaut wird. Durch die stiftförmige Ausbildung des Wärmeleiterelements wird eine definierte Temperaturableitung von der gewählten örtlichen Temperatur-Meßstelle zur Außenfläche des Gleitlagerstützkörpers gewährleistet. Die an der Außenfläche des Gleitlagerstützkörpers am Wärmeleiterelement gemessene Temperatur stellt daher eine Temperaturgröße dar, die definierbar und reproduzierbar von der an der gewählten örtlichen Meßstelle herrschenden Temperatur abhängig, im allgemeinen praktisch gleich ist.

In bevorzugter Ausführungsform der Erfindung ist das Wärmeleitelement zusammen mit einer wärmeisolierenden Umhüllung in einem Temperatur-Meßstopfen angebracht und dieser Temperatur-Meßstopfen mit seinem Meßstopfenkörper in eine Aufnahmebohrung im Gleitlagerstützkörper passend eingesetzt.

Der Temperatur-Meßstopfen kann hierbei in die Aufnahmebohrung eingepreßt oder eingeschraubt sein. Ein solcher Temperatur-Meßstopfen stellt in sich ein stabiles Element dar, so daß vom Wärmeleiterelement keine für die Gleitschicht schädlichen Einflüsse ausgeübt werden können.

Der Temperaturmeßstopfen kann in einer Ausführungsform eine Senkung sowie eine Durchgangsbohrung zur Aufnahme des stiftförmigen Wärmeleiterelements aufweisen, wobei das Wärmeleiterelement im Bereich der Senkung mit dieser Senkung füllender isolierender Masse umgossen ist und einen nach der Außenseite des Gleitlagerstützkörpers weisenden Stiftkopf aufweist. Der Stiftkopf bietet eine besonders günstige Ansatzfläche für das Temperaturfühler- und Temperatur-Meßelement. Zur Bildung dieses Stiftkopfes oder anstatt der Ausbildung eines Stiftkopfes kann das Wärmeleiterelement auf einen Teil seiner Länge mit abgesetztem Querschnitt ausgebildet sein und in diesem abgesetzten Bereich gleichen Durchmesser wie die Durchgangsbohrung im Temperatur-Meßstopfen aufweisen. Auf diese Weise ist das Wärmeleiterelement im Bereich der Durchgangsbohrung fest und sicher im Temperatur-Meßstopfen gehalten, so daß keine Schwingungen oder sonstige nachteilige Bewegungen über das Wärmeleiterelement in den Bereich der Gleitschicht übertragen werden.

Der Temperatur-Meßstopfen kann aus gleichem Material wie der Gleitlagerstützkörper bestehen, was für die Erhaltung der vollen Stabilität des Gleitlagerstützkörpers von Vorteil ist.

An seiner zur Gleitschicht gerichteten Stirnfläche kann der Temperatur-Meßstopfen mit Metall, vorzugsweise Notlaufeigenschaften aufweisender Lagerlegierung, beschichtet sein. Diese Beschichtung ist dann von besonderem Vorteil, wenn das Gleitlager zwischen dem Gleitlagerstützkörper und der Gleitschicht eine zusätzliche Trägerschicht, beispielsweise aus Bleibronze oder dergleichen aufweist. Der Temperatur-Meßstopfen kann dann mit gleichem Material beschichtet sein wie das Material einer solchen Trägerschicht.

Will man in einem erfindungsgemäßen Gleitlager vermeiden, daß Material des Wärmeleiterelements in die Lagerlauffläche gelangen und dort evtl. nachteilige Einflüsse haben könnte, so kann das Wärmeleiterelement an seinem der Gleitschicht benachbarten Ende zumindest um die Dicke der Gleitschicht gegenüber der Lagerlauffläche zurückversetzt sein. Da das Wärmeleiterelement in einem hinter bzw. unter der Gleitschicht liegenden Bereich in festen, wärmeleitenden Kontakt mit dem Gleitlagerstützkörper bzw. einer evtl. vorgesehenen Trägerschicht gebracht werden kann, ist der sichere Temperaturabgriff auch dann vollständig gewährleistet. Überdies kann das Wärmeleiterelement in solchem Fall an seinem der Gleitschicht benachbarten Ende mit der Gleitschicht überdeckt sein. Es besteht dann unmittelbarer wärmeübertragender Kontakt des Wärmeleiterelements zur Gleitschicht, ohne daß das Wärmeleiterelement Einfluß auf die Lagerlauffläche ausübt. Es ist aber auch möglich, die Gleitschicht zur Bildung einer vor der Stirnseite des Wärmeleiterelements liegenden Vertiefung im Bereich des Wärmeleiterelements auszunehmen. Diese Ausnehmung wirkt dann für die Lagerlauffläche praktisch in Art einer Schmiermitteltasche, wobei das Schmiermittel eine wärmeleitende Verbindung zwischen dem Wärmeleiterelement und der Lagerlauffläche bzw. der Gleischicht bildet.

Das Wärmeleiterelement kann auch an seinem der Gleitschicht abgewandten Ende gegenüber der Außenfläche des Gleitlagers zurückversetzt sein. Hierdurch wird ein gewisser Schutz für die vom Temperaturfühler- und Temperatur-Meßelement zu berührende Fläche erreicht. Außerdem wird verhindert. Daß das Wärmeleiterelement zumindest an Teilen seiner äußeren Stirnfläche mit der Lageraufnahme in Berührung kommt und Wärme an die Lageraufnahme ableitet. Andererseits kann für viele Zwecke von Vorteil sein, das Wärmeleiterelement an definierten Teilen seiner äußeren Stirnfläche in Berührung mit der Lageraufnahme zu bringen, um eine sichere mechanische Abstützung des Wärmeleiterelements an der Lageraufnahme zu gewährleisten. Die dann unvermeidliche Wärmeableitung vom Wärmeleiterelement auf die Lageraufnahme muß dann bei der Temperaturermittlung berücksichtigt werden.

Wenn die Erfindung bei solchen Gleitlagern angewandt wird, die in Form einer in den Zwischenraum zwischen der Lageraufnahme und dem Lagerzapfen einzuturnenden Lagerschale ausgebildet sind, kann man entweder vorsehen, daß das Temperaturfühler- und Temperatur-Meßelement zum Einturnen der Lagerschale zeitweilig in der Lageraufnahme zurückgezogen und nach dem Einturnen der Lagerschale in Berührung mit dem Wärmeleiterelement gebracht wird. Diese Möglichkeit setzt aber voraus, daß das Temperaturfühler- und Temperatur-Meßelement an mehr oder weniger gut zugänglicher Stelle des Lagergehäuses angebracht ist. Vielfach wird das auf das Wärmeleiterelement greifende Temperaturfühler- und Temperatur-Meßelement mit einer elastischen, meist federnden Andrückvorrichtung versehen sein, und somit gegenüber der Lageraufnahme vorstehen, wenn kein Gleitlager in die Lageraufnahme eingesetzt ist. Um solcher Ausbildung und Anbringungsweise des Temperaturfühler- und Temperatur-Meßelements in Lagergehäuse Rechnung zu tragen, kann im Rahmen der Erfindung bei einzuturnenden Lagerschalen in der äußeren Umfangsfläche der Gleitlagerschale zu jedem Wärmeleiterelement eine in Umfangsrichtung der Gleitlagerschale zu der äußeren Stirnfläche des Wärmeleiterelements ausgerichtete Anschlupf-Fase für den jeweiligen Temperaturfühler angebracht sein. Diese Anschlupf-Fase kann kurz ausgebildet sein und auf die äußere Umfangsfläche der Gleitlagerschale führen, so daß beim Einturnen der Gleitlagerschale das Temperaturfühler- und Temperatur-Meßelement mit seinem stirnseitigen Ende über die äußere Umfangsfläche der Gleitlagerschale bis auf die äußere Stirnfläche des Wärmeleiterelements gleitet. Diese letztere Möglichkeit wird sich besonders empfehlen, wenn das Wärmeleiterelement mit seiner äußeren Stirnfläche gegenüber der äußeren Umfangsfläche der Gleitlagerschale zurückversetzt ist.

Ausführungsbeispiele der Erfindung werden im folgenden anhand der Zeichnung näher erläutert. Es zeigen:

Fig. 1 eine erfindungsgemäße Gleitlagerschale die in eine mit Temperaturfühler- und Temperatur-Meßelement ausgestattete Hälfte eines Lagergehäuses eingesetzt ist;

Fig. 2 den Ausschnitt II der Figur 1 in bevorzugter Ausführungsform der Erfindung;

Fig. 3 den Ausschnitt II der Figur 1 in abgewandelter Ausführungsform der Erfindung;

Fig. 4 den Ausschnitt II der Figur 1 in einer dritten Ausführungsform der Erfindung;

Fig. 5 eine erfindungsgemäße Gleitlagerschale während des Einturnens in eine Lagergehäuse-Hälfte und

Fig. 6 eine Teilansicht B der Gleitlagerschale gemäß Figur 5.

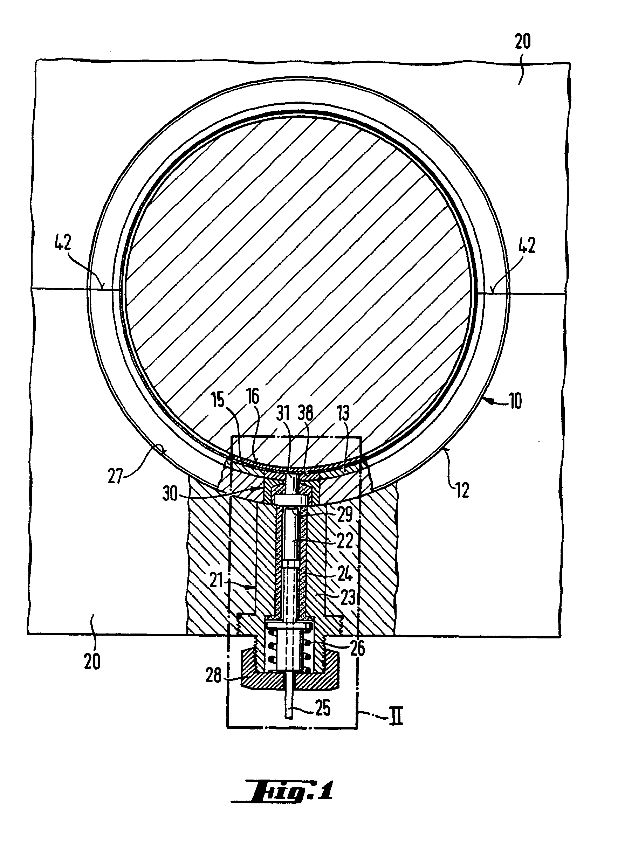

Im Beispiel der Figur 1 ist eine Gleitlagerschale 10 in eine Hälfte eines Lagergehäuses 20 eingesetzt. In der Gleitlagerschale 10 ist ein Temperatur-Meßstopfen 30 angebracht, der einem in dem Lagergehäuse 20 befestigten Temperaturfühler-und Temperatur-Meßelement 21 gegenübersteht. Wie aus den Figuren 1 bis 5 ersichtlich, enthält dieses Temperaturfühler- und Temperatur-Meßelement 21 einen eigentlichen Temperaturfühler 22, der axial verschiebbar in eine in das Lagergehäuse 20 eingesetzten, beispielsweise eingeschraubten Hülse 23, und zwar innerhalb einer in diese eingesetzten wärmeisolierenden Führungsbuchse 24 geführt ist. Der Temperaturfühler 22 enthält einen geeigneten Temperatur-Meßgeber, beispielsweise ein Thermoelement, der über eine Zuleitung 25 mit einem entsprechenden Anzeigegerät verbunden ist. Der Temperaturfühler 22 wird mittels einer Andrückfeder 26 radial einwärts des Lagergehäuses 20 nach dessen Lageraufnahme 27 hin gedrückt, wobei sich die Andrückfeder 26 an einer Schraubkappe 28 abstützt. Auf diese Weise wird der Temperaturfühler 22 mit seinem einwärtigen Ende 29 in wärmeleitenden Kontakt mit der als Kontaktfläche für den Wärmefühler ausgebildeten äußeren Stirnfläche 32 des im Temperatur-Meßstopfen 30 angebrachten Wärmeleiterelements 31 gedrückt.

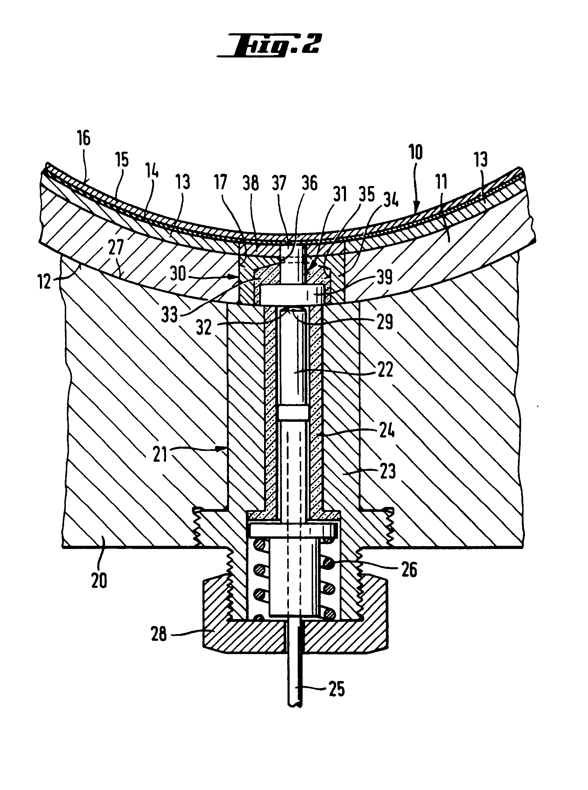

Wie besonders aus den Figuren 2 bis 4 ersichtlich, weist die Gleitlagerschale 10 einen schalenförmigen Stützkörper 11 aus Stahl auf, der mit seiner äußeren Umfangsfläche 12 in der Lageraufnahme 27 liegt. An der Innenseite ist der Stützkörper 11 mit einer Trägerschicht 13, beispielsweise aus Bleibronze belegt, diese Trägerschicht 13 aus Bleibronze trägt eine dünne Diffusionssperrschicht 14, beispielsweise aus Nickel, auf der wiederum die die Lagerlauffläche 16 tragende Gleitschicht 15 angebracht ist. Der Gleitlagerstützkörper 11 ist an der für die Temperaturmessung vorgesehenen Stelle mit einer den Temperatur-Meßstopfen 30 aufnehmenden Bohrung 17 versehen, in die der Temperatur-Meßstopfen eingepreßt oder eingeschraubt ist.

Der im dargestellten Beispiel das Wärmeleiterelement 31 mit einer wärmeisolierenden Umhüllung 33, beispielsweise aus Kunstharz oder Keramik, aufnehmende Meßstopfenkörper 34 besteht aus Stahl und ist in seinem Inneren mit einer Senkung 35 und einer Durchgangsbohrung 36 zur Aufnahme des stiftförmigen Wärmeleiterelements 31 ausgebildet. Falls die wärmeisolierende Umhüllung 33 aus keramischem Material besteht, ist sie passend in die Senkung 35 einzementiert. Bevorzugt ist das Wärmeleiterelement 31 innerhalb der Senkung 35 mit der wärmeisolierenden Umhüllung 33 umgossen, beispielsweise mit Gießharz. Im Bereich der Durchgangsbohrung 36 ist das Wärmeleiterelement 31 in festen wärmeleitenden Kontakt in den Meßstopfenkörper 34 eingepreßt. Wie die Figuren 2 bis 4 zeigen, steht das Wärmeleiterelement 31 mit seinem vorderen stirnseitigen Endbereich 37 gegenüber dem Meßstopfenkörper 34 vor und ist in wärmeleitendem Kontakt mit einem auf der Stirnseite des Temperaturmeßstopfens 30 angebrachten Metallbelegung 38. Diese Metallbelegung besteht im dargestellten Beispiel aus dem gleichen, Notlaufeigenschaften aufweisenden Material wie die Trägerschicht 13, nämlich Bleibronze. Während das Wärmeleiterelement 31 im vorderen Teil seiner Länge mit abgesetztem, in die Durchgangsbohrung 36 des Meßstopfenkörpers 34 passendem Querschnitt ausgebildet ist, weist es im rückwärtigen Teil seiner Länge einen größeren Querschnitt auf, so daß ein Stiftkopf 39 gebildet wird. Der Stiftkopf 39 trägt wiederum die Stirnfläche 32, die die Kontaktfläche für den Temperaturmeßfühler 22 bildet.

Im Beispiel der Figur 2 liegt der Temperatur-Meßstopfen 30 mit seiner rückwärtigen Stirnfläche, d.h. der Stirnfläche 32 des stiftförmigen Wärmeleiterelements 31, der umgebenden ringförmigen Stirnfläche der isolierenden Umhüllung 33 und der ringförmigen Stirnfläche des Meßstopfen-Körpers 34 in der gewölbten Außenfläche 12 des Gleitlagerstützkörpers 11. Dies kann durch entsprechende Oberflächenbearbeitung gewährleistet werden. Die freie Oberfläche der Metallbelegung 38 des Temperatur-Meßstopfens 30 und die innere Stirnfläche des Wärmeleiterelements 31 liegen in der zylindrischen Innenfläche der Trägerschicht 13. Diese Anpassung wird beim Räumen der Gleitlagerschale 10 vor dem Anbringen der Diffusionssperrschicht 14 und der Gleitschicht 15 erreicht. Auf diese Weise werden die Metallbelegung 38 und die innere Stirnfläche des Wärmeleiterelements 31 glatt durchgehend von der Diffusionssperrschicht 14 und der Gleitschicht 15 überdeckt. Zugleich ist die sichere wärmeleitende Verbindung zwischen der Gleitschicht 15 und dem Wärmeleiterelement 31 gebildet.

Zur Erzielung hoher Wärmeleitfähigkeit besteht das Wärmeleiterelement 31 im dargestellten Beispiel aus Silber oder Kupfer. Am äußeren Umfangsbereich seiner rückwärtigen Stirnfläche 32 stützt sich das Wärmeleiterelement 31 an der ringförmigen Stirnfläche der Hülse 23 des Temperaturfühler- und Temperatur-Meßelements 21 ab. Diese Abstützfläche kann aber in der Praxis so klein gehalten werden, daß eine wesentliche Beeinflussung des Meßergebnisses durch Wärmeableitung nicht eintritt.

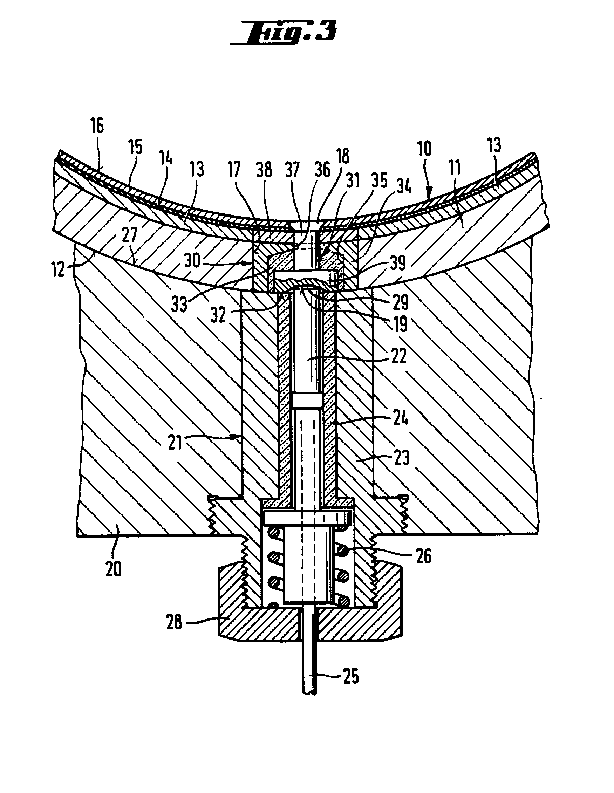

Im Beispiel der Figur 3 ist die Gleitschicht 15 im Bereich des Wärmeleiterelements 31 mit einer Ausnehmung 18 versehen, die die innere Stirnfläche des Wärmeleiterelements 31 frei läßt und eine Art von Schmiermitteltasche bildet. Ferner ist das Wärmeleiterelement an seiner äußeren Stirnfläche 32 mit einer Vertiefung 19 zur Aufnahme des fühlerseitigen Endes 29 des Temperaturmeßfühlers 22 ausgebildet. Diese Vertiefung 19 ist an ihren Rändern derartig abgerundet gewölbt, daß der Temperatur-Meßfühler 22 mit seinem fühlerseitigen, entsprechend abgerundeten Ende 29 praktisch ungehindert in diese Vertiefung bzw. aus dieser Vertiefung 19 herausgleiten kann. Der Temperaturmeßfühler 19 herausgleiten kann. Der Temperaturmeßfühler 22 steht um die Tiefe der Vertiefung 39 mehr aus der Hülse 23 und der wärmeisolierenden Führungsbuchse 24 vor als im Beispiel der Figur 2.

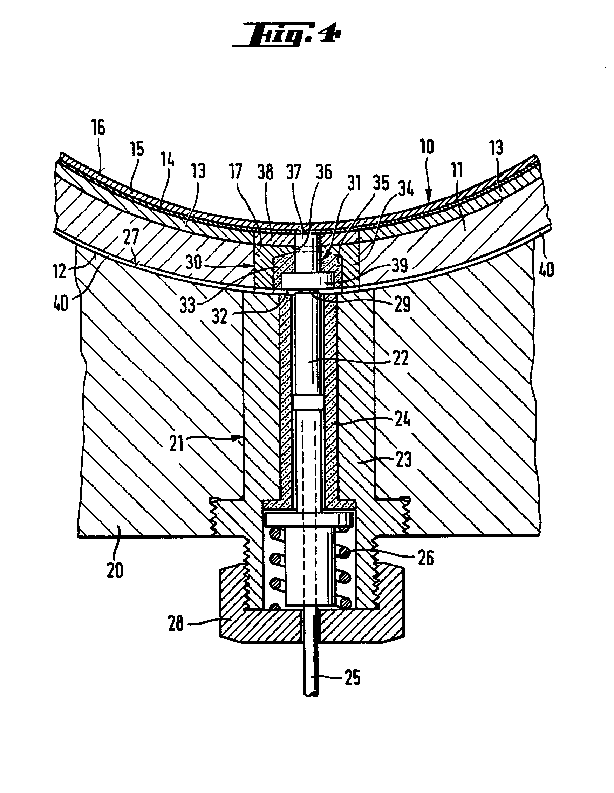

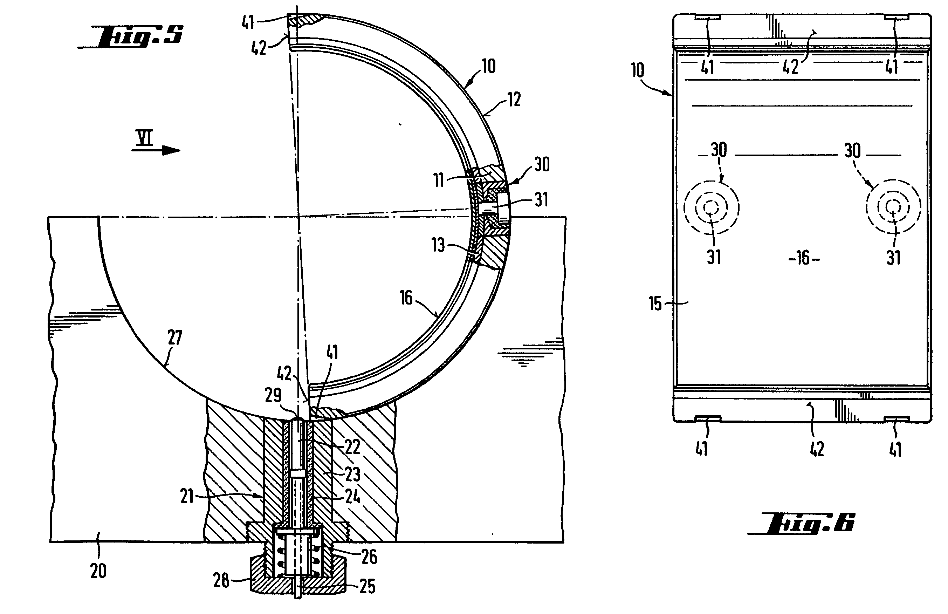

Im Beispiel der Figur 4 ist im Unterschied zum Beispiel nach Figur 2 die vom Temperaturfühler zu berührende Stirnfläche 32 des Wärmeleiterelements 31 gegenüber der äußeren Umfangsfläche 12 des Gleitlagerstützkörpers 11 zurückversetzt. Jedoch ist die ringförmige rückwärtige Stirnfläche des Meßstopfenkörpers 34 mit der äußeren Umfangsfläche 12 des Gleitlagerstützkörpers 11 ausgerichtet. Damit sind die Stirnfläche 32 des Wärmeleiterelements 31 und die mit ihr ausgerichtete ringförmige Stirnfläche der wärmeisolierenden Umhüllung 33 gegenüber der ringförmigen Stirnfläche des Meßstopfenkörpers 34 axial eingezogen. Für Gleitlagerschalen 10, die in das Lagergehäuse 20 einzuturnen sind, ist eine mit dem Wärmeleiterelement 31 am äußeren Umfang der Lagerschale 10 ausgerichtete Führungsnut 40 gebildet, die von beiden Seiten her auf die Stirnfläche 32 des Wärmeleiterelements 31 führt. An den beiden an den Teilflächen der Lagerschale 10 liegenden Enden geht die Führungsnut 40 in eine Anschlupf-Fase 41 über, wie sie in den Figuren 5 und 6 gezeigt ist. Als weiterer Unterschied gegenüber dem Ausführungsbeispiel nach Figur 2 sind der Meßstopfenkörper 34 mit etwas stärkerer Wandung und der Stiftkopf 39 mit etwas geringerem Durchmesser als im Beispiel der Figur 2 ausgebildet. Dadurch wird eine vergrößerte Abstützfläche des Meßstopfenkörpers 34 auf der Hülse 23 des Temperaturfühler- und Temperatur-Meßelements 21 gebildet, während die Abstützung des Wärmeleiterelements 31 auf der Hülse 23 entfällt.

Im Beispiel der Figuren 5 und 6 ist eine Lagerschale 10 mit grundsätzlicher Ausbildung nach Figur 1 und 2 dadurch zum Einturnen in das Lagergehäuse 20 ausgebildet, das an jeden Endbereich der äußeren Umfangsfläche 12 benachbart zu jeder der Trennflächen 42 Anschlupf-Fasen 41 ausgebildet sind. Wie aus Figur 6 ersichtlich, ist für jedes Wärmeleiterelement 31 an jedem der beiden Enden der Umfangsfläche 12 eine Anschlupf-Fase 41 gebildet, die in Umfangsrichtung mit dem jeweiligen Wärmeleiterelement 31 ausgerichtet ist.

Solange die Lageraufnahme 27 freiliegt, wird der Temperaturfühler 22 durch seine Andrückfeder 26 bis zum Anschlag an die Führungsbuchse 24 radial einwärts gedrückt, so daß sein fühlerseitiges Ende 29 gegenüber der Fläche der Lageraufnahme 27 vorsteht. Beim Einturnen der Lagerschale 10 läuft die Anschlupf-Fase 41 über das fühlerseitige Ende 29 des Temperaturfühlers 22 und drückt dabei den Temperaturfühler 22 gegen die Wirkung der Andrückfeder 26 radial auswärts. Im Beispiel der Figuren 5 und 6 wird das fühlerseitige Ende 29 des Temperaturfühlers 22 dabei auf die äußere Umfangsfläche 12 des Gleitlagerstützkörpers geführt, bis die in der äußeren Umfangsfläche 12 liegende äußere Stirnfläche des Wärmeleiterelements 31 mit dem fühlerseitigen Ende 29 des Temperaturfühlers 22 zusammengeführt ist. Im Beispiel der Figur 4, in welchem sich eine auf die Stirnfläche 32 des Wärmeleiterelements 31 führende Führungsnut an jede Anschlupf-Fase 41 anschließt, wird das fühlerseitige Ende 29 von der Anschlupf-Fase 41 in die Führungsnut 40 und von dort auf die Stirnfläche 32 des Wärmeleiterelements 31 geführt.

Gleitlager mit Einrichtungen zur örtlichen Bestimmung der in der Gleitschicht herrschenden Temperatur

**Bezugzeichenliste**

10 Gleitlagerschale
11 Stützkörper
12 Umfangsfläche
13 Trägerschicht
14 Diffusionssperrschicht
15 Gleitschicht
16 Lagerlauffläche
17 Bohrung
18 Ausnehmung
19 Vertiefung
20 Lagergehäuse
21 Temperaturfühler- und Temperatur-Meßelement
22 Temperaturfühler
23 Hülse
24 Führungsbuchse
25 Zuleitung
26 Andrückfeder
27 Lageraufnahme
28 Schraubkappe
29 einwärtiges Ende
30 Temperatur-Meßstopfen
31 Wärmeleiterelement
32 Stirnfläche
33 Umhüllung
34 Meßstopfenkörper
35 Senkung
36 Durchgangsbohrung
37 stirnseitiger Endbereich
38 Metallbelegung
39 Stiftkopf
40 Führungsnut
41 Anschlupf-Fase
42 Trennfläche

**Patentansprüche**

1. Einrichtung zur Bestimmung der in der Gleitschicht (15) eines Gleitlagers an einer bestimmten Stelle herrschenden Temperatur, die durch eine Bohrung im Lagergehäuse (20) und im Lagerstützkörper (11) des Gleitlagers hindurch bis in den Bereich der die Lagergleitfläche bildenden Gleitschicht (15) greift, dadurch gekennzeichnet, daß sie in ein stiftförmiges, den Stützkörper (11) durchsetzendes Wärmeleiterelement (31) und ein auf das Wärmeleiterelement (31) greifendes, im Lagergehäuse (20) befindliches Temperaturfühler- und Temperaturmeßelement (21) unterteilt ist; und daß das Wärmeleiterelement (31) an seinem der Gleitschicht (15) benachbarten Ende in wärmeleitender Verbindung mit dem Stützkörper (11) bzw. einer im Stützkörper (11) angebrachten Zwischenschicht (13) gehalten und an seinem übrigen Teil wärmeisolierend gegenüber dem Stützkörper (11) abgeschirmt ist.

2. Einrichtung nach Anspruch 1, dadurch gekennzeichnet, daß das Wärmeleitelement (31) zusammen mit einer wärmeisolierenden Umhüllung (33) in einem Temperatur-Meßstopfen (30) angebracht ist und dieser Temperatur-Meßstopfen mit seinem Meßstopfenkörper (34) in eine Aufnahmebohrung (17) im Gleitlagerstützkörper (11) passend eingesetzt ist.

3. Einrichtung nach Anspruch 2, dadurch gekennzeichnet, daß der Temperatur-Meßstopfen (30) in die Aufnahmebohrung eingepreßt oder eingeschraubt ist.

4. Einrichtung nach Anspruch 2 oder 3, dadurch gekennzeichnet, daß der Meßstopfenkörper (34) eine Senkung (35) sowie eine Durchgangsbohrung (36) zur Aufnahme des stiftförmigen Wärmeleiterelements (31) aufweist, wobei das Wärmeleiterelement im Bereich der Senkung mit einer diese Senkung füllenden Umhüllung (33) aus wärmeisolierender Masse umgossen ist und einen nach der Außenseite des Gleitlagerstützkörpers weisenden Stiftkopf (39) aufweist.

5. Einrichtung nach einem der Ansprüche 2 bis 4, dadurch gekennzeichnet, daß das Wärmeleiterelement (31) auf einem Teil seiner Länge mit abgesetztem Querschnitt ausgebildet ist und in diesem abgesetzten Bereich gleichen Durchmesser wie die Durchgangsbohrung (36) im Meßstopfenkörper (34) aufweist.

6. Einrichtung nach Anspruch 2, dadurch gekennzeichnet, daß der Meßstopfenkörper (34) aus gleichem Material wie der Gleitlagerstützkörper (11) besteht.

7. Einrichtung nach Anspruch 2, dadurch gekennzeichnet, daß der Temperatur-Meßstopfen (30) an seiner zur Gleitschicht (15) gerichteten Stirnflächen mit Metall (38), vorzugsweise Notlaufeigenschaften aufweisender Lagerlegierung, beschichtet ist.

8. Einrichtung nach einem der Ansprüche 1 bis 7, dadurch gekennzeichnet, daß das Wärmeleiterelement (31) an seinem der Gleitschicht (15) benachbarten Ende (37) zumindest um die Dicke der Gleitschicht (15) gegenüber der Lagerlauffläche (16) zurückversetzt ist.

9. Einrichtung nach einem der Ansprüche 1 bis 8, dadurch gekennzeichnet, daß in der äußeren Stirnfläche (32) des Wärmeleiterelements (31) eine das fühlerseitige Ende (29) des Temperaturfühlers (22) aufnehmende Vertiefung (19) vorgesehen ist.

10. Gleitlager mit einer Einrichtung nach einem der Ansprüche 1 bis 9, in Form einer in den Zwischenraum zwischen der Lageraufnahme und dem Lagerzapfen einzuturnenden Lagerschale, dadurch gekennzeichnet, daß in der äußeren Umfangsfläche (12) der Gleitlagerschale (10) zu jedem Wärmeleiterelement (31) eine in Umfangsrichtung der Gleitlagerschale (10) zu der äußeren Stirnfläche (31) des Wärmeleiterelements (31) ausgerichtete Anschlupf-Fase (41) für den jeweiligen Temperaturfühler (22) angebracht ist.

11. Gleitlager nach Anspruch 10, dadurch gekennzeichnet, daß die Anschlupf-Fase (41) als bis zur äußeren Stirnfläche (32) des Wärmeleiterelements (31) führende umfängliche Führungsnut (40) für den Temperaturfühler (22) in der äußeren Umfangsfläche (12) der Gleitlagerschale (10) ausgebildet ist.

**Revendications**

1. Dispositif pour déterminer la température qui règne dans la couche de glissement (15) d'un palier lisse, en un endroit déterminé, lequel pénètre, à travers un perçage ménagé dans la boîte (20) et dans le corps d'appui (11) du palier lisse, jusque dans la région de la couche de glissement (15) qui forme la surface de glissement du palier, caractérisé par le fait qu'il est divisé en un élément conducteur de la chaleur en forme de tige (31) qui traverse le corps d'appui (11), et en un élément de captage et de mesure de la température (21) qui touche l'élément conducteur de la chaleur (31) et qui se trouve dans la boîte (20) du palier; et par le fait que l'élément conducteur de la chaleur (31), à son extrémité voisine de la couche de glissement (15), est maintenu en liaison conductrice de la chaleur avec le corps d'appui (11) ou, respectivement, avec une couche intermédiaire (13) posée dans le corps d'appui (11), sa partie restante étant protégée de manière thermiquement isolante par rapport au corps d'appui (11).

2. Dispositif selon la revendication 1, caractérisé par le fait que l'élément conducteur de la chaleur (31) est monté avec une enveloppe thermiquement isolante (33) dans un bouchon de mesure de la température (30), et que ce bouchon de mesure de la température est introduit par son corps (34) de bouchon de mesure, de manière ajustée, dans un perçage de positionnement (17) ménagé dans le corps d'appui (11) du palier lisse.

3. Dispositif selon la revendication 2, caractérisé par le fait que la bouchon de mesure de la température (30) est introduit à force ou vissé dans le perçage de positionnement.

4. Dispositif selon la revendication 2 ou 3, caractérisé par le fait que le corps (34) du bouchon de mesure comporte un enfoncement (35), ainsi qu'un perçage traversant (36), pour recevoir l'élément conducteur de la chaleur en forme de tige (31), cependant que l'élément conducteur de la chaleur est entouré dans la région de l'enfoncement par une enveloppe (33) qui remplit cet enfoncement et qui est constituée par une masse coulée thermiquement isolante, et qu'il comporte une tête de tige (39) dirigée vers la face extérieure du corps d'appui du palier lisse.

5. Dispositif selon l'une des revendications 2 à 4, caractérisé par le fait que l'élément conducteur de la chaleur (31) est réalisé avec une section transversale réduite sur une partie de sa longueur, et qu'il présente sur cette partie réduite le même diamètre que le perçage traversant (36) ménagé dans le corps (34) du bouchon de mesure.

6. Dispositif selon la revendication 2, caractérisé par le fait que le corps (34) du bouchon de mesure est constitué par la même matière que le corps d'appui (11) du palier lisse.

7. Dispositif selon la revendication 2, caractérisé par le fait que le bouchon de mesure de la température (30), sur sa surface frontale dirigée vers la couche de glissement (15), est revêtue de métal (38), et de préférence d'un alliage pour palier présentant des propriétés de tenue en cas de graissage insuffisant.

8. Dispositif selon l'une des revendications 1 à 7, caractérisé par le fait que l'élément conducteur de la chaleur (31), à son extrémité (37) qui est voisine de la couche de glissement (15), est en retrait par rapport à la surface de glissement (16) du palier d'une longueur au moins égale à l'épaisseur de la couche de glissement (15).

9. Dispositif selon l'une des revendications 1 à 8, caractérisé par le fait qu'il est prévu, dans la surface frontale extérieure (32) de l'élément conducteur de la chaleur (31), un enfoncement (19) recevant l'extrémité (29) du capteur de température (22) qui est située du côté du capteur.

10. Palier lisse comprenant un dispositif selon l'une des revendications 1 à 9, et réalisé sous la forme d'un coussinet de palier à introduire par rotation dans l'intervalle compris entre le réceptacle du palier et le tourillon, caractérisé par le fait qu'un biseau (41) servant de rampe pour le capteur de température correspondant (22) est ménagé dans la surface périphérique extérieure (12) du coussinet (10) du palier lisse, pour chaque élément conducteur de la chaleur (31), en étant aligné, dans la direction périphérique du coussinet (10) du palier lisse, sur la surface frontale extérieure (32) de l'élément conducteur de la chaleur (31).

11. Palier lisse selon la revendication 10, caractérisé par le fait que le biseau (41) servant de rampe est réalisé sous la forme d'une rainure annulaire (40) destinée au capteur de température (22) dans la surface périphérique extérieure (12) du coussinet (10) du palier lisse et allant jusqu'à la surface frontale extérieure (32) de l'élément conducteur de la chaleur (31).

**Claims**

1. A device for the determination of temperature at a determined point of the overlay (15) of a plain bearing, which extends through a hole in the bearing housing (20) and in the backing (11) of the plain bearing up to the region of the overlay (15) forming the sliding surface of the bearing, characterised in that it is divided into a rod-like heat conducting element (31) extending through the backing (11) and a temperature sensing and temperature measuring element (21) which is situated in the bearing housing (20) and engages the heat conducting element (31); and that the heat conducting element (31) is kept, at its end adjacent to the overlay (15), in a heat conducting contact with the backing (11) or an intermediate layer (13) provided in the backing (11) and is at its remaining part heat-insulatingly screened from the backing (11).

2. A device according to claim 1, characterised in that the heat conducting element (31) is together with a heat-insulating jacket (33), situated in a temperature measuring plug (30) and said temperature measuring plug is with its body (34) inserted to fit in a reception hole (17) in the plain bearing backing (11).

3. A device according to claim 2, characterised in that the temperature measuring plug (30) is pressed or screwed into the reception hole.

4. A device according to claim 2 or 3, characterised in that the body (34) of the measuring plug has a counterbore (35) and a throughhole (36) for receiving the rod-like heat conducting element (31), wherein in the area of the counterbore a jacket (33) of a heat-insulating material which fills this counterbore is cast around the heat conducting element, the latter being provided with a peg head (39) facing the outer side of the backing.

5. A device according to one of the claims 2 to 4, characterised in that the heat conducting element (31) has at one portion of its length a reduced cross-section, and this reduced portion has the same diameter as the throughhole (36) in the body (34) of the measuring plug.

6. A device according to claim 2, characterised in that the body (34) of the measuring plug is of the same material as the plain bearing backing (11).

7. A device according to claim 2, characterised in that the temperature measuring plug (30) is at its end face facing the overlay (15) coated with metal (38), preferably bearing alloy which has anti-seizure properties.

8. A device according to one of the claims 1 to 7, characterised in that the heat conducting element (31) is at its end (37) adjacent to the overlay (15) displaced at least by the thickness of the overlay (15) with respect to working surface (16) of the bearing.

9. A device according to one of the claims 1 to 8, characterised in that a depression (19) which accommodates the sensor end (29) of the temperature sensor (22) is provided in the outer end face (32) of the heat conducting element (31).

10. A plain bearing provided with a device according to one of the claims 1 to 9 in the form of a bearing liner forced in the space between the portion receiving the bearing and the journal, characterised in that in the outer peripheral surface (12) of the plain bearing liner (10) is for every heat conducting element (31) provided a guide chamfer (41) for the respective temperature sensor (22) extending in the peripheral direction of the plain bearing liner (10) to the outer end surface (32) of the heat conducting element (31).

11. A plain bearing according to claim 10, characterised in that the guide chamfer (41) is formed as a peripheral guiding groove (40) for the temperature sensor (22) in the outer peripheral surface (12) of the plain bearing liner (10), said guiding groove extending up to the outer end face (32) of the heat conducting element (31).

Fig.1

## Fig.2

## Fig. 3

## Fig. 4

Fig.5

Fig.6

5